# EUROPEAN PATENT SPECIFICATION

(11) **EP 0 513 925 B1**
(45) Date of publication and mention of the grant of the patent: **12.11.1997**
(21) Application number: 92201368.5
(22) Date of filing: 13.05.1992
(51) Int. Cl.: H04N 7/087

(54) **Apparatus for the reception of information in a television channel**
Gerät zum Empfang von Information in einem Fernsehkanal
Dispositif pour la réception d'information dans un canal de télévision

(30) Priority: 13.05.1991 IT TO910350
(43) Date of publication of application: 19.11.1992
(73) Proprietor: SOCIETA ITALIANA PER LO SVILUPPO DELL'ELETTRONICA S.I.SV.EL S.P.A., 10060 None (TO) (IT)
(72) Inventor: Zecchin, Massimo, Maniago (PN) (IT)

(56) References cited:
- EP-A- 0 306 208
- ELEKTOR ELECTRONICS vol. 15, no. 171, 30 October 1989, CANTERBURY GB pages 34 - 38 , XP000065737 A.CLAPP 'Computer-Controlled Teletext System'

## Description

The present invention relates to a method and apparatus for the reception and displaying of information in a television channel, under the form of a plurality of teletext pages.

What is intended as the "teletext" system (in Italy "Televideo") is known; such information transmission system provides for inserting within the television signal, during several lines of frame return, coded data, that is repeated in cyclic mode, and that can be displayed on the television under the form of pages containing text and/or graphics.

It is also known the major inconveniences of such system: the amount of time necessary for displaying the page containing the information required is variable, and often great, that is translated as consultation difficulties, in particular information, such as the train time-tables, that often require the passing from one page to another, to then maybe returning to the previous page.

The aim of the present invention is therefore that of indicating a method and apparatus for the transmission of information that allows, for, at least in a part of cases, among those being selected more frequently, of making more convenient the consultation of data on behalf of the user.

In allowing for such aims the present invention has as its object a method for the reception and displaying of information having the characteristics described in the attached claim 1; the invention has also as an object a reception apparatus specifically designed for carrying out the above said method.

Further aims and advantages of the present invention will become clear from the following detailed description and annexed drawings, supplied as a nonlimiting example, wherein:
figure 1 schematically represents a part of the circuit of the apparatus for the reception of data according to the information;
figure 2 schematically represents a part of the circuit of a second apparatus for the reception of data according to the information;
figure 3 schematically represents a part of the logic circuit of the apparatus for the reception of data according to figure 2.

The procedure of which 'telesoftware' consists is known; it consists of a data transmission system for personal computers, carried out in a 'teletext' environment, in which the data is collected in 'files'.

For 'file' it is herein intended a block of data, typically constituting a program for computers.

A system of this type is the object of IT-A-1 241 311 (Italian patent application 67873/A-90), in which a system that provides, apart from the transmission of 'files', also that of information that allows the receiving terminal to automatically construct the directories of the 'files' themselves, is described. A similar system is described in EP-A-0 306 208. The difference between teletext and telesoftware lies in the type of information inserted in each single page; operatively for teletext the information contained in a page can be directly displayed on the screen of the television; whereas for telesoftware the information contained in a page is not destined to be displayed, but is stored in a computer, so as to be successively elaborated and/or utilised in various ways; moreover the possibility of compressing the data so as to accelerate the transmission and acquisition is also provided.

The invention proposes that the 'teletext' page relative to a given subject (for example that of the stock exchange data, or that with meteorological information, or that with the train or air time-tables), are located in a single 'file', that is compressed and transmitted with the 'telesoftware' technique; the compression greatly reduces the acquisition time.

As the structure of the 'files' in which the single 'teletext' pages are memorised is not normalised, the service that from here on will be called 'turboteletext' may result in being tied to a determined type of receiving terminal; this limitation can be overcome if the structure of the 'files' is normalised in transmission, and if the cards are adjusted to such normalisation.

For a further understanding two examples are made.

According to the 'telesoftware' procedure described in the mentioned Italian patent application the transmission of a configuration page is provided for, which contains information that allows the receiving terminal to automatically construct a master directory of the groups in which the 'telesoftware files' are divided, and the indexes of the single groups. In such a case the receiving terminal could automatically present the user with the group index, in which the 'turboteletext' item will figure; if the user selects such item, the index of the 'turboteletext' group will appear, i.e. the list of relative files, among which, for example, that of the plane time-tables.

If however the 'telesoftware' procedure utilised is a simplified procedure, i.e. if the 'files' are not divided into groups, or in any case information is not transmitted for automatically constructing a tree directory, the receiving terminal has to provide for identifying the 'turboteletext files' from the normal 'telesoftware files' (i.e. to divide them into two distinct groups); this could be carried out for instance if the 'turboteletext files' possess a particular extension code that distinguishes them (for example .TTV).

In such a case the terminal will present the user with two items: 'telesoftware' and 'turboteletext'; on choosing the first a menu of the normal 'telesoftware files' will be displayed; on choosing the second the menu of the 'turboteletext files' will be displayed.

The user of a personal computer supplied with a teletext/telesoftware 'card' also has to have a software (turboteletext or turbotelesoftware) that automatically carries out the following operations:
- acquisition of the 'telesoftware' page containing the required 'file' (for example that of the train time-tables);
- decompression of said 'file';
- division of said 'file' in as many 'files' as are the 'teletext' pages relative to the chosen subject.

Upon the termination of the above mentioned operation, the user will find in the mass memory of the computer 'files' that are identical to those that would be obtained with the direct acquisition of the 'teletext' pages, carried out manually; the consultation can take place utilising the provided commands from the menu calling the page memorised on the disc.

Two advantages are evident: the shorter acquisition time (the compression carried out on the overall 'file' reduces the transmission time up to 25-30%) and the simultaneous availability in the memory of all the pages relative to the chosen subject.

If the transmission of all the 'telesoftware' pages were carried out on an appropriate television network (for example in Italy on RAI 3), separately therefore from the normal 'teletext', a considerable reduction of the cycle time would be had, that can be valued as a cycle time be equal to a fifth of the normal one.

The reception could also be obtained through televisions containing special 'teletext' cards modified for receiving 'turboteletext'. Generally speaking a 'teletext' microprocessor card could be furnished with such performances, by transferring to the microprocessor of the card the programmes realised on the personal computer for the 'telesoftware' reception.

For the practical realisation of the invention the following is necessary: Transmission:
a routine for the generation and transmission of 'turboteletext' 'files' is needed; such routine could function on a personal computer furnished with a 'teletext/telesoftware' card, and has to carry out the following operations:
- acquisition of the pages indicated by the editor, that can be either static or folders;
- creation of a unique 'file' obtained by summing all the files containing the above mentioned pages;
- compression of the unique 'file';
- creating a 'telesoftware' folder containing the said file;
- sending said 'file' to the central computer, for its transmission of the 'telesoftware' pages indicated by the editor.

The described routine could be manually or automatically launched the same amount of times as the number of 'Turbotelevideo' 'files' that are desired to be created; for example for the stock exchange 'file' the routine should be launched upon the termination of negotiations; many other subjects require a daily launch (weather, television programs, etc.), whereas others require a weekly launching, others, such as the rail and air time-tables, require a launch after a number of months.

It is evident that the system proposed system by the invention is not apt for pages that are to be updated in real time (the latest news, etc.).

For the reception it is necessary to:
- to carry out several additions to the managing program of the teletext-telesoftware card; they regard the automatic recognition of the 'turboteletext files' and the addition in the 'menu' of the 'turboteletext' item. After the acquisition, the 'files' have to be automatically placed under the treatment that will now be described:
- decompression of the 'turboteletext file';
- division of the actual 'file' in the single 'files' of 960 characters that constitute the single pages, and
- memorising said 'files' in the 'directory' with the appropriate names, so as that the already existing function "re-view a page or sub-page already memorised" can be utilised.

Or a television is needed with a 'teletext' card modified for receiving 'turboteletext': the card should comprise a microprocessor with a suitable memory and 'firmware' that performs all the previous described functions.

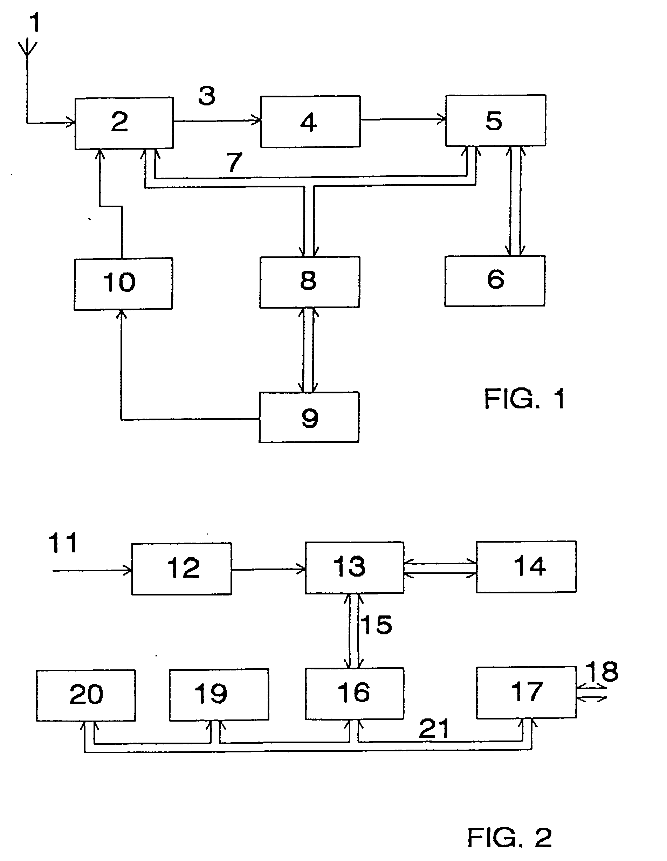

With reference to figure 1 the reference number 1 indicates the receiving antenna; the reference number 2 indicates a conventional television tuner, such as the frequency synthesis type for example, comprising intermediate frequency circuitry and a video detector; the reference number 3 indicates the base band video signal exiting from the tuner 2 and entering block 4, that represents a video processor, that provides for extracting the teletext information from the signal 3, and to send it to the actual teletext decoder, indicated with the reference number 5.

Reference number 6 indicates a page memory, also being of the conventional type.

Reference number 7 indicates the serial bus that connects the tuner 2 and the decoder 5 to block 8, that represents an interface, that transforms the signals coming from block 9, that represents a personal computer, for proceeding on to the serial bus 7; the interface 8 is in fact connected to the computer 9 by way of a standard parallel gate.

Reference number 10 indicates an input converter, that feeds the tuner 2, converting the available input from the personal computer 9.

The functioning of the circuit of figure 1 is the following.

The personal computer is furnished with an appropriate management software; which will provide, upon request, to display in an appropriate menu the items of the 'telesoftware files' available (for example through the acquisition of the 'master directory' transmitted according to the 'telesoftware' procedure); among such items the 'turboteletext' or 'turbotelevideo' item will appear; if the user chooses such item, a 'sub-menu' will be displayed with the 'turboteletext' files available; the user will choose one (for example that of the RAI Televideo relative to the plane times); the computer will then carry out the following operations:
- acquisition of the 'telesoftware' file containing the requires 'file' (that of the plane times);
- the decompression of said 'file' and the division into single 'files' of 960 characters constituting a single page, the memorising of such files in the directory with the appropriate names.

Upon the termination of the above mentioned operation, the user will find in the mass memory of the computer a number of 'files' corresponding to the chosen subject(in the example 61 sub-pages, corresponding to the 'Televideo' pages comprising 420 through to 422 plus those comprising 424 through to 434); these 'files' are identical to those that would be obtained with the direct acquisition of the 'Televideo' pages, carried out manually; the consultation can take place utilising the provided commands from the menu calling the page memorised on the disc (view a page or sub-page already memorised).

With reference to figure 2 the reference number 11 indicates the video signal (analogous to signal 3 of figure 1), coming from the video detector of the television; the reference number 12 indicates an extracting circuit of the Televideo data (analogous to circuit 4 of figure 1); the reference number 13 indicates a Televideo decoder (analogous to circuit 5 of figure 1), realised utilising the appropriate integrating circuits, for example by Philips; the decoder comprises several reception banks being completely separated and independent (for example using the SAA 9042 circuit it is possible to receive up to 8 pages); it is therefore possible to simultaneously receive a plurality of 'telesoftware' pages; the receiving process is improved thus enabling the maximum reception speed possible.

Reference number 14 indicates a teletext page memory, of elevated capacity, reference number 15 indicates the known iic buses that connect the decoder 13 with block 16, that represents a microprocessor or micro controller (for example of the type 8051) that carries out the management of the teletext reception; the reference number 17 indicates an interface for the remote control unit of the television and reference number 18 the connection bus with such remote control.

Reference number 19 indicates a fixed memory (such as the EPROM type for example) and the reference number 20 indicates a read write memory, (RAM)) of the non-volatile type.

The reference number 21 indicates the bus that connects the microprocessor 16 with the interface 17 and the memories 19 and 20.

The functioning of the circuit of figure 2 is analogous to that mentioned above with reference to the version mentioned in figure 1.

The microprocessor 16 takes on the managing control, due to an appropriate software, contained in the EPROM 19; the memory RAM 20 has the purpose of memorising the compressed telesoftware 'files' received, while the 'files' or teletext pages, decompressed and divided are memorised in memory 14.

A part of the data, the directory for example, is memorised in the internal RAM of the microprocessor 16.

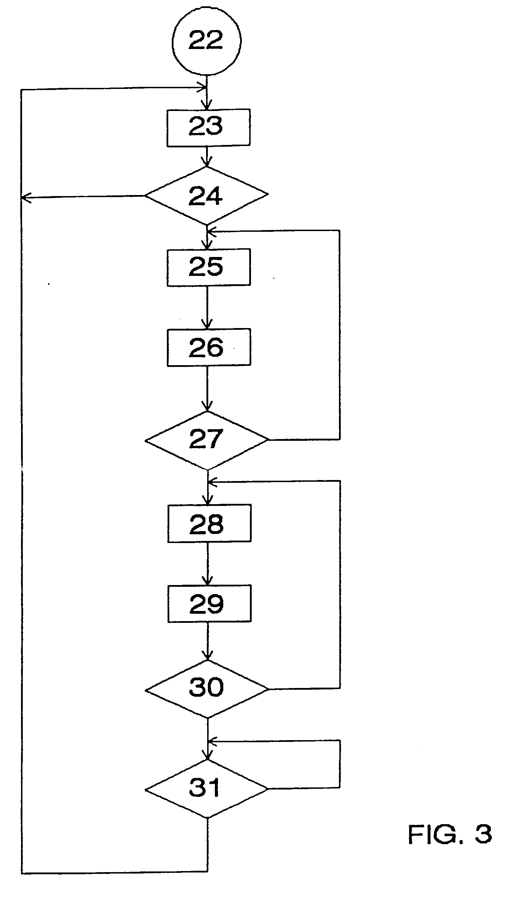

For a clearer comprehension a key part of the control logic of the process according to the invention is now described with reference to figure 3.

In figure 3 the reference number 22 indicates the initial starting block of the procedure; it is supposed that when the user depresses the teletext activation key said block is reached. Form block 22 control passes to block 23.

Block 23 provides to fulfil the normal teletext functions; from block 23 however control also reaches block 24.

Block 24 is a test block; it verifies whether the user has requested a turboteletext folder; in the affirmative case control passes to the successive block 25; on the contrary (negative) control returns to block 23; in all the test blocks of this figure, the inferior output corresponds to the YES output; a lateral output corresponds to a NO output.

Block 25 provides for the gradual acquisition of the pages of the requested turboteletext folder and passes the data to the successive block 26.

Block 26 provides for memorising the data gradually received from block 25 in the memory 20 and passes the control to the successive block 27.

Block 27 is a test block; it verifies whether the reception of the requested turboteletext folder has finished; in the affirmative case control passes to the successive block 28; on the contrary (negative) control passes back to the preceding block 25.

Block 28 provides for reading from the memory 20 the data relative to the requested folder and to decompress it; as soon as it has reconstructed a teletext page, it passes the control to the successive block 30.

Block 30 is a test block; it verifies whether the decompressing of the requested turboteletext folder has taken place; in the affirmative case control passes to the successive block 31; on the contrary (negative) control passes back to the preceding block 28.

Block 31 is a test block; it verifies whether a new command has been reached from the user; in the affirmative case control passes back to block 23; on the contrary (negative) control passes back to the same block 31.

The characteristics of described apparatus result in being clear form the description.

From the description the advantages of the apparatus object of the present invention are also clear.

In particular they are represented by the reduction in time for the acquisition and simultaneous availability in the memory of all the pages of the desired 'files'.

This second advantage manifests itself in various ways: it allows the user to create a file of teletext pages with little effort (without having to acquire the pages one at a time); the user can furnish himself with 'utilities' that allow, for example, the automatic acquisition of previously chosen 'turboteletext' 'files' at fixed times every day, for the constitution of personalised databases, not to mention the elaboration of memorised data.

For example the user could collect the kitchen recipes, and arrange them in an appropriate 'utility' for their consultation, he could construct graphics with the course of the stock exchange, he could collect all the news on a given occurrence, etc.

It is clear that numerous variants are possible by the skilled man of the art, without however departing from the scope of the invention as set out in the claims.

## Claims

1. Method for the reception and displaying of information in a television channel, under the form of a plurality of teletext pages, characterised by the following features:
- the data representing the content of said teletext pages are compressed and transmitted in form of a special file according to the telesoftware transmission procedure ;
- said special file is automatically recognised by a special software routine provided in the receiving apparatus; the special file is then decompressed and divided in single files of a determined number of characters each, representing the single teletext pages;
- said single files are memorised ready to be displayed at request;
- a directory of the pages is also created and displayed.

2. Method for the reception and displaying of information in a television channel according to claim 1, characterised by the fact that the receiving apparatus comprises a personal computer (9), a teletext/software card (2,4,5,6,8,10) and is furnished with a suitable management program.

3. Method for the reception and displaying of information in a television channel according to claim 1, characterised by the fact that the receiving apparatus comprises a television set, a teletext decoding circuit (12,13) with a page memory (14), an additional microprocessor (16), an additional data memory (19,20) and is furnished with a suitable management program.

4. Method for the reception and displaying of information in a television channel according to claim 2 or 3, characterised by the fact that the management program comprises 'utilities' that allow for the automatic acquisition of previously selected 'files' at fixed times at appropriate periods and the relative memorisation.

5. Method for the reception and displaying of information in a television channel according to claim 2 or 3, characterised by the fact that the management program comprises 'utilities' that elaborates the information memorised.

6. Method for the reception and displaying of information in a television channel according to claim 2 or 3, characterised by the fact that it is provided to display in an appropriate menu form the items of the available decompressed files and that among such items the specific item (turboteletext) appears relative to a teletext page.

7. Method for the reception and displaying of information in a television channel according to claim 6, characterised by the fact that said menu is created by distinguishing the specific files based on an appropriate extension code contained in their name.

8. Method for the reception and displaying of information in a television channel according to claim 6, characterised by the fact that said menu is created by way of acquisition of the 'master directory' transmitted according to the 'telesoftware' procedure.

9. Method for the reception and displaying of information in a television channel according to claim 6, characterised by the fact that it is provided, whenever the user chooses such specific item for displaying a sub-menu with the available compressed files.

10. Apparatus for the reception and displaying of information in a television channel, under the form of a plurality of teletext pages, the data representing the content of said teletext pages being compressed and transmitted in form of a special file according to the telesoftware transmission procedure, characterised in that the apparatus comprises:
- means for the automatic recognition of said special file;
- means for decompressing said special file and dividing it in single files of a determined number of characters each, representing the single teletext pages;
- means for memorising said single files ready to be displayed at request;
- means for creating and displaying a directory of the pages.

## Patentansprüche

1. Verfahren zum Empfang und zur Anzeige von Informationen in einem Fernsehkanal, in der Form von mehreren Teletext-Seiten,
gekennzeichnet durch die folgenden Merkmale:
- die Daten, die den Inhalt der Teletext-Seiten darstellen, werden in Form einer bestimmten Datei entsprechend dem Telesoftware-Übertragungsverfahren komprimiert und gesendet;
- die bestimmte Datei wird automatisch von einer bestimmten Softwareroutine erkannt, die in der Empfangsvorrichtung vorgesehen ist;
- die bestimmte Datei wird dann dekomprimiert und in bestimmte Dateien mit jeweils einer vorbestimmten Anzahl von Zeichen aufgeteilt, welche die einzelnen Teletextseiten darstellen;
- die einzelnen Dateien werden fertig zur Anzeige auf Anforderung gespeichert;
- ein Verzeichnis der Seiten wird ebenfalls erzeugt und angezeigt.

2. Verfahren für den Empfang und die Anzeige von Informationen in einem Fernsehkanal nach Anspruch 1,
dadurch gekennzeichnet, daß die Empfangsvorrichtung einen Personal Computer (9), eine Teletext/Software-Karte (2, 4, 5, 6, 8, 10) enthält und mit einem geeigneten Verwaltungsprogramm ausgestattet ist.

3. Verfahren für den Empfang und die Anzeige von Informationen in einem Fernsehkanal nach Anspruch 1,
dadurch gekennzeichnet, daß die Empfangsvorrichtung ein Fernsehgerät umfaßt, eine Teletext-Dekodierschaltung (12, 13) mit einem Seitenspeicher (14), einem zusätzlichen Mikroprozessor (16), einem zusätzlichen Datenspeicher (19, 20) und mit einem geeigneten Verwaltungsprogramm ausgestattet ist.

4. Verfahren für den Empfang und die Anzeige von Informationen in einem Fernsehkanal nach Anspruch 2 oder 3,
dadurch gekennzeichnet, daß das Verwaltungsprogramm "Dienstprogramme" umfaßt, die die automatische Erfassung von vorab selektierten "Dateien" zu festen Zeitpunkten in geeigneten Zeitabschnitten und die zugehörige Speicherung erlauben.

5. Verfahren für den Empfang und die Anzeige von Informationen in einem Fernsehkanal nach Anspruch 2 oder 3,
dadurch gekennzeichnet, daß das Verwaltungsprogramm "Dienstprogramme" umfaßt, die die gespeicherte Information bearbeiten.

6. Verfahren für den Empfang und die Anzeige von Informationen in einem Fernsehkanal nach Anspruch 2 oder 3,
dadurch gekennzeichnet, daß es vorgesehen ist zum Anzeigen eines geeigneten Menüs aus den Elementen der verfügbaren, dekomprimierten Dateien und daß unter diesen Elementen das zu einerTeletext-Seite gehörende bestimmte Element (Turboteletext) erscheint.

7. Verfahren für den Empfang und die Anzeige von Informationen in einem Fernsehkanal nach Anspruch 6,
dadurch gekennzeichnet, daß das Menü erzeugt wird durch Unterscheiden der bestimmten Dateien, basierend auf einem geeigneten Erweiterungscode, der in ihrem Namen enthalten ist.

8. Verfahren für den Empfang und die Anzeige von Informationen in einem Fernsehkanal nach Anspruch 6,
dadurch gekennzeichnet, daß das Menü im Wege der Erfassung des entsprechend dem "Telesoftware"-Verfahren gesendeten "Hauptverzeichnisses" erzeugt wird.

9. Verfahren für den Empfang und die Anzeige von Informationen in einem Fernsehkanal nach Anspruch 6,
dadurch gekennzeichnet, daß es vorgesehen ist, wenn der Benutzer ein solches bestimmtes Element zum Anzeigen eines Unter-Menüs mit den verfügbaren komprimierten Dateien wählt.

10. Vorrichtung für den Empfang und die Anzeige von Informationen in einem Fernsehkanal, in der Form von mehreren Teletext-Seiten, wobei die Daten, die den Inhalt der Teletext-Seiten darstellen, in der Form einer bestimmten Datei entsprechend dem Telesoftware-Übertragungsverfahren komprimiert und gesendet werden, dadurch gekennzeichnet, daß die Vorrichtung umfaßt:
- eine Einrichtung zur automatischen Erkennung der bestimmten Datei;
- eine Einrichtung zum Dekomprimieren der bestimmten Datei und Aufteilen in einzelne Dateien mit jeweils einer vorbestimmten Anzahl von Zeichen, die die einzelnen Teletext-Seiten darstellen;
- eine Einrichtung zum Speichern der einzelnen Dateien, die auf Anforderung anzeigebereit sind;
- eine Einrichtung zum Erzeugen und Anzeigen eines Verzeichnisses der Seiten.

## Revendications

1. Procédé pour la réception et l'affichage d'informations dans un canal de télévision, sous la forme d'une pluralité de pages de télétexte, caractérisé par les particularités suivantes :
- les données représentant le contenu desdites pages de télétexte sont comprimées et transmises sous forme d'un fichier spécial, selon la procédure de transmission télésoftware (téléchargement de logiciel);
- ledit fichier spécial est automatiquement reconnu par un sous-programme de logiciel spécial prévu dans l'appareil de réception; le fichier spécial est ensuite décomprimé et divisé en fichiers uniques d'un nombre déterminé de caractères pour chacun, représentant les pages individuelles de télétexte;
- lesdits fichiers uniques sont mémorisés en état disponible pour un affichage à la suite d'une requête;
- un répertoire des pages est également créé et affiché.

2. Procédé pour la réception et l'affichage d'informations dans un canal de télévision selon la revendication 1, caractérisé par le fait que l'appareil de réception comprend un ordinateur personnel (9), une carte télétexte/logiciel (2, 4, 5, 6, 8, 10) et est doté d'un programme de gestion approprié.

3. Procédé pour la réception et l'affichage d'informations dans un canal de télévision selon la revendication 1, caractérisé par le fait que l'appareil de réception comprend un ensemble de télévision, un circuit de décodage de télétexte (12,13) avec une mémoire de pages (14), un micro-processeur supplémentaire (16), une mémoire supplémentaire de données (19, 20), et est doté d'un programme de gestion approprié.

4. Procédé pour la réception et l'affichage d'informations dans un canal de télévision selon la revendication 2 ou 3, caractérisé par le fait que le programme de gestion comprend des "programmes utilitaires" qui permettent l'acquisition automatique de "fichiers" sélectionnés antérieurement à des instants fixés pendant des intervalles appropriés, et la mémorisation relative.

5. Procédé pour la réception et l'affichage d'informations dans un canal de télévision selon la revendication 2 ou 3, caractérisé par le fait que le programme de gestion comprend des "programmes utilitaires" qui élaborent les informations mémorisées.

6. Procédé pour la réception et l'affichage d'informations dans un canal de télévision selon la revendication 2 ou 3, caractérisé par le fait qu'il est fourni afin d'afficher sous une forme de menu approprié les articles des fichiers décomprimés disponibles, et que parmi ces articles, des articles particuliers (le turbotélétexte) apparaissent liés à une page de télétexte.

7. Procédé pour la réception et l'affichage d'informations dans un canal de télévision selon la revendication 6. caractérisé par le fait que ledit menu est créé en distinguant les fichiers particuliers sur la base d'un code d'extension approprié, contenu dans leurs noms.

8. Procédé pour la réception et l'affichage d'informations dans un canal de télévision selon la revendication 6, caractérisé par le fait que ledit menu est créé au moyen d'une acquisition du "répertoire principal" transmis selon la procédure "télésoftware".

9. Procédé pour la réception et l'affichage d'informations dans un canal de télévision selon la revendication 6. caractérisé par le fait qu'il est fourni, quelque soit le moment où l'utilisateur choisi cet article particulier pour un affichage, un sous menu avec les fichiers comprimés disponibles.

10. Dispositif pour la réception et l'affichage d'informations dans un canal de télévision, sous la forme d'une pluralité de pages de télétexte, les données représentant le contenu desdites pages de télétexte étant comprimées et transmises sous forme d'un fichier spécial. selon la procédure de transmission télésoftware. caractérisé en ce que le dispositif comprend :
- des moyens de reconnaissance automatique dudit fichier particulier:
- des moyens pour décomprimer ledit fichier spécial et le diviser en fichiers uniques d'un nombre déterminé de caractères pour chacun. représentant les pages uniques de télétexte:
- des moyens de mémorisation desdits fichiers uniques prêts à être affichés à la demande:
- des moyens de création et d'affichage d'un répertoire de pages.
